# EUROPÄISCHE PATENTANMELDUNG

(11) **EP 2 429 265 A2**
(43) Veröffentlichungstag der Anmeldung: **14.03.2012**
(21) Anmeldenummer: 11005127.3
(22) Anmeldetag: 24.06.2011
(51) Int. Cl.: H05B 37/02

(54) **Verfahren und Vorrichtung zur Kommunikation über eine Lastleitung**

(30) Priorität: 27.07.2010 DE 102010032395; 14.08.2010 DE 102010034347
(71) Anmelder: ABB AG, 68309 Mannheim (DE)
(72) Erfinder: Goldyn, Dirk, 58454 Witten (DE); Czimmeck, Frank, 58511 Lüdenscheid (DE); Rümenapf, Peter, 44149 Dortmund (DE); Linde, Holger Dr., 44137 Dortmund (DE); Madonna, Gian-Luigi Dr., 8112 Otelfingen (CH); Cimino, Mikael Dr., 5507 Mellingen (CH); Ruschival, Thomas, 68161 Mannheim (DE); Bloch, Richard, 5415 Nussbaumen (CH); Ecklebe, Andreas Dr., 8953 Dietikon (CH)

(57) **Zusammenfassung**

Die Erfindung betrifft ein Kommunikationssystem (1) umfassend:
- ein Steuergerät (2), das seriell zwischen Phasenleiter (L) und Lastleitung (L') in eine Netzleitung (4) geschaltet ist, um nur während eines Energieübertragungszeitfensters (EF) einen Versorgungsstrom an mindestens einer Last (34) zuzulassen und nur während eines nicht mit dem Energieübertragungszeitfenster (EF) überlappenden Kommunikationszeitfensters (KF) eine bidirektionale Kommunikation durch Erfassen und/oder Modulieren eines Kommunikationsstroms über die Lastleitung (L') durchzuführen; und
- eines oder mehrere mit der Last (34) versehene Lastmodule (3), die zueinander parallel und seriell mit dem Steuergerät (2) in der Lastleitung (L') verschaltet sind, um nur während des Energieübertragungszeitfensters (EF) elektrische Energie aus der Lastleitung (L') zu entnehmen und der entsprechenden Last (34) bereitzustellen
und um nur während des Kommunikationszeitfensters (KF) die bidirektionale Kommunikation durch Erfassen und/oder Modulieren des Kommunikationsstroms über die Lastleitung (L') durchzuführen.

## Beschreibung

### Technisches Gebiet

Die vorliegende Erfindung betrifft Kommunikationssysteme, die eine Steuereinheit umfassen, die über eine Lastleitung zur elektrischen Energieübertragung mit einem oder mehreren Lastmodulen kommuniziert. Die Erfindung betrifft des Weiteren ein Steuergerät sowie ein Lastmodul für ein derartiges Kommunikationssystem. Die Erfindung betrifft ferner Verfahren zur Kommunikation zwischen einem Steuergerät und einem oder mehreren Lastmodulen.

### Stand der Technik

Kommunikationssysteme für die Gebäudeautomatisierung umfassen in der Regel eine zentrale Steuereinheit sowie mit einem elektrisch zu betreibenden Verbraucher (Last) versehene Lastmodule. Die Lastmodule werden über ein Versorgungsnetz mit elektrischer Energie versorgt. Gleichzeitig wird das Versorgungsnetz dazu verwendet, Daten an die Lastmodule zu senden.

Eine typische Anwendung ist beispielsweise die Beleuchtungssteuerung, bei der die Lichtintensität von mehreren Lampen individuell eingestellt werden soll. Dazu kann es bei komplexen Beleuchtungssystemen notwendig sein, eine Vielzahl von Beleuchtungseinrichtungen mit Hilfe einer gemeinsamen Steuereinheit einzustellen. In diesem Fall ist es notwendig, dass die Lastmodule neben dem jeweiligen Leuchtelement Leistungssteller aufweisen, die mit der gemeinsamen Steuereinheit über ein vordefiniertes Protokoll kommunizieren.

Aufgrund der Fortschritte der Technik ist die gemeinsame Steuerung von mehreren Lasten durch ein Steuergerät zusehends auch für kleinere Anwendungen im Hausbereich geeignet. Beispielsweise enthalten kommerziell verfügbare LED-Lampen bereits Leistungssteller, die die Leistung an die LED mithilfe einer Pulsweitenmodulation bereitstellen. Durch Steuern des Tastverhältnisses der Pulsweitenmodulation ist es möglich, die Lichtintensität der LED-Lampen zu variieren. Weiterhin kann der Kommunikationskanal zwischen der Steuereinheit und dem Leistungssteller, der in dem Lastmodul integriert ist, auch zur Übertragung einer Rückmeldung verwendet werden, die eine effizientere Nutzung der elektrischen Energie, eine Überwachung der tatsächlichen Last und eine höhere Zuverlässigkeit ermöglichen könnte.

Bei herkömmlichen Installationen, beispielsweise Beleuchtungsinstallationen in einem Gebäude, steht seitens der Steuereinheit, die sich z.B. am Ort eines herkömmlichen Lichtschalters befinden kann, in der Regel kein Nullleiter zur Verfügung. Stattdessen steuert die Steuereinheit die Lampe durch Schließen oder Öffnen eines Schalters, der einen Phasenleiter schaltet. Lediglich an den zu steuernden Lastmodulen, die die jeweilige Last umfassen, stehen der geschaltete bzw. gesteuerte Phasenleiter und der Nullleiter zur Verfügung. Diese Konfiguration verhindert die Möglichkeit des Kodierens der Daten in Spannungspegel, wenn keine zusätzliche Verbindungsleitung vorgesehen werden soll.

Weiterhin ist es bei Vorsehen von mehreren Lastmodulen sinnvoll, dass die anzusteuernden Verbraucher der Lastmodule einzeln adressiert bzw. angesteuert werden können. Dies erfordert ein Erkennungsverfahren, durch das die einzelnen Lastmodule die Steuereinheit über ihr Vorhandensein informieren und durch das den Lastmodulen eine logische Adresse zugeordnet werden kann. Dafür ist eine bidirektionale Kommunikation notwendig. Zusätzlich benötigen die Lastmodule einen Informationskanal zu der Steuereinheit, um ihren Status, z. B. für Diagnose- und Messzwecke, zu kommunizieren oder um kritische Befehle von der Steuereinheit zu bestätigen.

Im Stand der Technik ist eine Vielzahl von Verfahren und Protokollen zur Kommunikation zwischen derartigen Steuereinheiten und Lasten bekannt. Während zu Beginn der Entwicklung analoge Steuerverfahren verwendet wurden, bei denen den einzelnen Lasten eine analoge, einer bestimmten Leistung entsprechenden Spannung im Bereich von 0 bis 10 V bereitgestellt wurde, sind mittlerweile mehrere digitale Steuerverfahren bekannt. Beim so genannten DMX 512-Standard ist eine Simplex-Kommunikation von einem Steuergerät mit bis zu 512 Lastmodulen bzw. Empfängern vorgesehen. Eine 8-Bit-Information wird in Paketen an die einzelnen Lastmodule gesendet, von denen jedes mit einer festgelegten Adresse versehen ist. Als weiterer Standard ist der DALI-Standard bekannt.

Beide oben genannten digitalen Standards erfordern das Vorsehen von Steuerleitungen zwischen der Steuereinheit und den Lastmodulen zusätzlich zu den Netzanschlüssen. Dies bedeutet einen zusätzlichen Installationsaufwand, wenn diese zusätzlichen Steuerleitungen nicht bereits in dem Gebäude vorgesehen sind. Ein weiterer als KNX bezeichneter Standard sieht vor, eine Information zwischen dem Steuergerät und dem Lastmodul über ein Spannungssignal auf den Netzleitungen zu übertragen. Dazu müssen sowohl das Steuergerät als auch der Leistungssteller mit Phase und Nullleiter verbunden sein. Weiterhin ist ein KNX-Netzleitungsmodem aufgrund seiner Komplexität für die Integration in Lampen nicht geeignet.

In der Patentschrift DE 196 03 680 C1 ist ein einfaches Verfahren zum Übertragen einer Information von einem Kodierer zu einem Dekodierer über eine Netzleitung beschrieben. Die Information wird über einen Phasenanschnitt der Wechselspannung codiert. Dabei entspricht ein Phasenanschnittswinkel der positiven Halbwelle einer Adresse des Dekodierers und der Phasenanschnittswinkel der negativen Halbwelle einer Helligkeitsinformation für die anzusteuernde Lampe. Ein weiteres Beispiel einer einfachen unidirektionalen Kommunikation über eine Versorgungsnetzleitung zwischen einem Steuergerät und mehreren Leistungsstellern wird in dem US-Patent 7,265,654 B1 beschrieben.

In der Patentanmeldung US 2009/0027175 wird vorgeschlagen, die effektive Leistung in einem oder mehreren Lastmodulen zu modulieren, um eine Information über eine Netzleitung zu übertragen.

Auch aus WO 2009/133489 A1 ist ein Verfahren zum Kodieren der Helligkeitsinformation für eine LED-Lampe in der Polarität einer Anzahl von aufeinander folgenden Halbwellen einer Netzwechselspannung bekannt, wobei die Kodierung so durchgeführt wird, dass der Leistungs-RMS-Wert nicht verändert wird.

In den obigen Beispielen wird die Information einem Spannungssignalverlauf zugeordnet, so dass Phasenleiter und Nullleiter sowohl auf der Seite des Steuergeräts als auch auf der Seite der Lastmodule benötigt werden. Weiterhin ist die Kommunikation lediglich unidirektional.

Dem gegenüber sieht die US-Patentschrift 6,211,624 B1 vor, die digitale Information durch Modulieren der Amplitude des Stroms nahe der Nulldurchgänge der Spannung auf den Netzleitungen zu übertragen und diese Information zu verwenden, um die der Lampe zugeführte Leistung zu steuern. Dadurch kann insbesondere die Helligkeit einer Leuchtstofflampe eingestellt werden.

Das in der Druckschrift US 6,225,759 B1 beschriebene Verfahren ähnelt dem vorangehenden darin, dass es ebenfalls das Beschneiden der Halbwellen des Wechselspannungssignals nahe den Nulldurchgängen beinhaltet. Es ist ein Dimmer zum seriellen Anschließen in einer Phasenleitung vorgesehen, so dass keine Verbindung zu dem Nullleiter benötigt wird, wobei die Möglichkeit des Steuerns von mehr als einer Lampe angegeben ist.

Die Patentschrift DE 101 63 957 A1 beschreibt ein elektronisches Zusatzmodul für Leuchtstofflampen, das durch eine Steuereinheit angesprochen werden kann. Es wird auch erwähnt, dass Farb- und Helligkeitsinformationen über die Netzleitung übertragen werden. Die Steuereinheit ist mit dem Phasenleiter und dem Nullleiter verbunden und die Adressen der Elektronikmodule an den Lampen müssen mithilfe mechanischer Schalter voreingestellt werden.

Die Patentschrift US 6,867,558 B2 betrifft die Möglichkeit, eine Gruppe von Lampen über eine Netzleitung zu steuern, ohne dass ein Umverdrahten hinsichtlich herkömmlicher Beleuchtungssysteme erforderlich ist.

Die obigen Offenbarungen dienen insgesamt der unidirektionalen Steuerung einer Gruppe von Lastmodulen und stellen keine Lösungen dar, in denen es den Lastmodulen möglich ist, eine Information zurück an die Steuereinheit zu übertragen.

Es ist daher Aufgabe der vorliegenden Erfindung, ein Kommunikationsverfahren und ein Kommunikationssystem zur Verfügung zu stellen, bei dem die Steuereinheit ohne Nullleiter auskommt und eine bidirektionale Kommunikation zwischen dem Steuergerät und mehreren Lastmodulen möglich ist.

### Offenbarung der Erfindung

Diese Aufgabe wird durch das Kommunikationssystem gemäß Anspruch 1 sowie durch das Steuergerät, das Lastmodul, das Kommunikationsverfahren, das Verfahren zum Betreiben eines Steuergeräts und das Verfahren zum Betreiben eines Lastmoduls gemäß den nebengeordneten Ansprüchen gelöst.

Weitere vorteilhafte Ausgestaltungen sind in den abhängigen Ansprüchen angegeben.

Gemäß einem ersten Aspekt ist ein Kommunikationssystem vorgesehen, welches umfasst:
- ein Steuergerät, das seriell zwischen Phasenleiter und Lastleitung in eine Netzleitung geschaltet ist, um nur während eines Energieübertragungszeitfensters einen Versorgungsstrom an mindestens einer Last zuzulassen und nur während eines nicht mit dem Energieübertragungszeitfenster überlappenden Kommunikationszeitfensters eine bidirektionale Kommunikation durch Erfassen und/oder Modulieren eines Kommunikationsstroms über die Lastleitung durchzuführen; und
- eines oder mehrere mit der Last versehene Lastmodule, die zueinander parallel und seriell mit dem Steuergerät zwischen der Lastleitung und dem Nulleiter der Netzleitung verschaltet sind, um nur während des Energieübertragungszeitfensters elektrische Energie aus der Lastleitung zu entnehmen und der entsprechenden Last bereitzustellen und um nur während des Kommunikationszeitfensters die bidirektionale Kommunikation durch Erfassen und/oder Modulieren des Kommunikationsstroms über die Lastleitung durchzuführen.

Gemäß einem weiteren Aspekt ist ein Verfahren zur Kommunikation zwischen einem Steuergerät und einem oder mehreren Lastmodulen in einem Kommunikationssystem vorgesehen. Das Kommunikationssystem weist ein Steuergerät, das seriell in eine Netzleitung geschaltet ist, und ein oder mehrere mit der Last versehene Lastmodule auf, die zueinander parallel und seriell mit dem Steuergerät in der Lastleitung verschaltet sind. Das Verfahren umfasst folgende Schritte:
- Betreiben des Steuergeräts, um zeitlich aufeinander folgend nur während eines Energieübertragungszeitfensters einen Versorgungsstrom zum Betreiben einer Last zuzulassen und um während eines nicht mit dem Energieübertragungszeitfenster überlappenden Kommunikationszeitfensters eine bidirektionale Kommunikation durch Erfassen und/oder Modulieren eines Kommunikationsstroms über die Lastleitung durchzuführen; und
- Betreiben des einen oder der mehreren Lastmodule, um nur während des Energieübertragungszeitfensters elektrische Energie aus der Lastleitung zu entnehmen und der entsprechenden Last bereitzustellen und um nur während des Kommunikationszeitfensters die bidirektionale Kommunikation durch Erfassen und/oder Modulieren des Kommunikationsstroms über die Lastleitung durchzuführen.

Das obige Kommunikationssystem und Kommunikationsverfahren sieht vor, die Kommunikation über die Lastleitung zeitlich von der Energieübertragung zu trennen. Während des Energieübertragungszeitfensters, das vorzugsweise um das Maximum des Spannungsverlaufs der Netzspannung liegt, wird die Stromaufnahme durch die Last ermöglicht. Weiterhin ist während des Kommunikationszeitfensters eine bidirektionale Kommunikation zwischen dem Steuergerät und dem Lastmodul vorgesehen, wobei der Strom in der durch das Steuergerät und das Lastmodul aufgebauten Stromschleife überwacht wird und in geeigneter Weise durch interne Impedanzen des Steuergeräts bzw. des Lastmoduls eingestellt wird.

Weiterhin kann das Steuergerät einen Leistungsschalter aufweisen, um diesen während des Energieübertragungszeitfensters zu schließen und außerhalb des Energieübertragungszeitfensters zu öffnen, wobei das mindestens eine Lastmodul einen Leistungsblock aufweist, um während des Energieübertragungszeitfensters die elektrische Energie von der Lastleitung zu entnehmen.

Gemäß einer Ausführungsform können das Steuergerät und das eine oder die mehreren Lastmodule jeweils ein Strommodem aufweisen, wobei jedes Strommodem während des Energieübertragungszeitfensters deaktiviert ist, so dass dieses im Wesentlichen keine Leitfähigkeit aufweist, und während des Kommunikationszeitfensters entweder zum Empfangen in einen "Listen"-Zustand versetzt wird, in dem die Impedanz des Strommodems so eingestellt wird, dass der Kommunikationsstrom auf einen vorgegebenen maximalen Stromwert beschränkt wird, oder in einen "Talk"-Zustand versetzt wird, in dem die Impedanz des Strommodems so variierbar ist, dass zum Senden einer zu übertragenden Information auf der Lastleitung der Kommunikationsstrom zwischen einem vorgegebenen ersten Stromwert und einem vorgegebenen zweiten Stromwert wechselt.

Insbesondere können mehrere Lastmodule vorgesehen sein, deren Strommodems den Stromfluss im "Listen"-Zustand auf jeweils den gleichen vorgegebenen maximalen Stromwert beschränken, wobei das Steuergerät ausgebildet ist, um eine Schätzung der Anzahl der angeschlossenen Lastmodule durchzuführen, indem in einer Einschaltphase die Strommodems aller Lastmodule in den "Listen"-Zustand versetzt werden, der sich in der Lastleitung einstellende Strom durch das Strommodem des Steuermoduls gemessen wird und die Anzahl der Lastmodule als ein Verhältnis des gemessenen Stroms zu dem für diesen Zustand im Steuermodul vorgegebenen maximalen Stromwert ermittelt wird.

Weiterhin kann das Kommunikationssystem ausgebildet sein, um die bidirektionale Kommunikation nur zwischen dem Steuergerät und einem des einen oder der mehreren Lastmodule durchzuführen.

Das Steuergerät und das eine oder die mehreren Lastmodule können ausgebildet sein, um eine Kollision aufgrund eines gleichzeitigen Sendens einer zu übertragenden Information auf der Protokoll-Ebene während der Adresszuordnung und / oder bei Anwendung von Frequenzmodulation anhand der Verzerrung des Signalverlaufs oder anhand eines Überschreitens des maximalen Stromwerts durch den Strom auf der Lastleitung zu erkennen.

Es kann vorgesehen sein, dass das Kommunikationszeitfenster einem Zeitfenster entspricht, in dem die Netzspannung betragsmäßig größer ist als ein erster Schwellenwert und betragsmäßig kleiner ist als ein zweiter Schwellenwert, und wobei das Energieübertragungszeitfenster einem Zeitfenster entspricht, bei dem die Netzspannung betragsmäßig größer ist als der zweite Schwellenwert.

Das Steuergerät und das eine oder die mehreren Lastmodule können jeweils ausgebildet sein, um einen Nulldurchgang der Netzspannung zu erkennen und um sich abhängig von einem Zeitpunkt des Nulldurchgangs zu synchronisieren.

Gemäß einem weiteren Aspekt ist ein Steuergerät für ein Kommunikationssystem zum seriellen Anschließen in einer Netzleitung vorgesehen. Das Steuergerät umfasst:
- einen Leistungsschalter zum Schalten eines Versorgungsstroms in der Lastleitung
- ein Strommodem zum Durchführen einer bidirektionale Kommunikation durch Erfassen und/oder Modulieren eines Kommunikationsstroms über die Lastleitung;
- einen Mikroprozessor respektive eine Datenverarbeitungseinheit, die ausgebildet ist, um nur während eines Energieübertragungszeitfensters den Leistungsschalter zu schließen, um den Versorgungsstrom für mindestens eine Last zuzulassen, und
   um nur während eines nicht mit dem Energieübertragungszeitfenster überlappenden Kommunikationszeitfensters die bidirektionale Kommunikation durch Erfassen und/oder Modulieren des Kommunikations-Stromes durchzuführen.

Gemäß einem weiteren Aspekt ist ein Lastmodul für ein Kommunikationssystem zum seriellen Verschalten zwischen einer Lastleitung und einem Nulleiter einer Netzleitung zum Übertragen von elektrischer Energie vorgesehen. Das Lastmodul umfasst:
- eine Last, insbesondere einen elektrischen Verbraucher;
- einen Leistungsblock, um elektrische Energie aus der Lastleitung zu entnehmen und der Last bereitzustellen;
- ein Strommoden zum Durchführen einer bidirektionale Kommunikation durch Erfassen und/oder Modulieren eines Kommunikationsstroms über die Lastleitung;
- einen Mikroprozessor respektive eine Datenverarbeitungseinheit, die ausgebildet ist, um nur während eines Energieübertragungszeitfensters elektrische Energie aus der Lastleitung zu entnehmen und der Last bereitzustellen und
   um nur während eines nicht mit dem Energieübertragungszeitfenster überlappenden Kommunikationszeitfensters die bidirektionale Kommunikation durch Erfassen und/oder Modulieren des Kommunikations-Stromes durchzuführen.

Für das Verfahren kann vorgesehen sein, dass das Steuergerät und das eine oder die mehreren Lastmodule während des Kommunikationszeitfensters entweder zum Empfangen von Daten in einen "Listen"-Zustand versetzt werden, in dem die Impedanz des Strommodems so eingestellt wird, dass der Kommunikationsstrom auf einen vorgegebenen maximalen Stromwert beschränkt wird, oder in einen "Talk"-Zustand versetzt werden, in dem die Impedanz des Strommodems so variierbar ist, dass zum Senden einer zu übertragenden Information auf der Lastleitung der Kommunikationsstrom zwischen einem vorgegebenen ersten Stromwert und einem vorgegebenen zweiten Stromwert wechselt.

Weiterhin können während einer Einschaltphase das eine oder die mehreren Lastmodule den Kommunikationsstrom in dem "Listen"-Zustand auf jeweils den gleichen vorgegebenen maximalen Stromwert beschränken, wobei das Steuergerät eine Schätzung der Anzahl der angeschlossenen Lastmodule durchführt, indem in einer Einschaltphase die Strommodems aller Lastmodule in den "Listen"-Zustand versetzt werden, der sich in der Lastleitung einstellende Strom durch das Strommodem des Steuermoduls gemessen wird und die Anzahl der Lastmodule als ein Verhältnis des gemessenen Stroms zu dem für diesen Zustand im Steuermodul vorgegebenen maximalen Stromwert ermittelt wird.

Gemäß einer Ausführungsform kann eine Adresszuordnung durchgeführt werden, indem das Steuergerät eine Aufforderung zum Anfordern einer Adresse durch das eine oder die mehreren Lastmodule sendet, die Lastmodule nach einer zufälligen Anzahl von Kommunikationszeitfenstern einen zufälligen Identifikationscode an das Steuergerät senden und das Steuergerät eine mit einer logischen Adresse und dem zufälligen Identifikationscode versehene Information sendet, so dass dem betreffenden Lastmodul anhand des gesendeten zufälligen Identifikationscodes seine logische Adresse zugewiesen wird.

Die mit der Erfindung erzielbaren Vorteile bestehen insbesondere darin, dass die bei einer Hausinstallation herkömmliche Verdrahtung einer über einen Lichtschalter einschaltbaren / ausschaltbaren Beleuchtung beibehalten werden kann, bei welcher der Phasenleiter der Netzleitung und die Lastleitung ("geschaltete Phase") am Lichtschalter vorhanden sind, während an der Beleuchtung der Nulleiter der Netzleitung und die Lastleitung vorhanden sind, d. h. sowohl am Lichtschalter als auch an der Beleuchtung sind lediglich zwei Drähte / Leitungen vorhanden. So ist es vorteilhaft und ohne Neuverlegung zusätzlicher Leitungen möglich, eine konventionell über einen Lichtschalter betriebene Beleuchtung auf die erfindungsgemäß vorgeschlagene Vorrichtung mit Steuergerät an Stelle des Lichtschalters und Lastmodul an Stelle der herkömmlichen Lampe in der Beleuchtung umzurüsten. Auch bei fehlerhafter Benutzung seitens des Anwenders, beispielsweise bei Betrieb eines erfindungsgemäßen Lastmoduls über einen herkömmlichen Lichtschalter oder bei Betrieb eines erfindungsgemäßen Steuergeräts zusammen mit einem herkömmlichen Leuchtmittel, wie einer Glühlampe, treten keinerlei Probleme auf, d. h. der herkömmliche Lichtschalter kann das erfindungsgemäße Lastmodul einschalten / ausschalten und das erfindungsgemäße Steuergerät kann das herkömmliche Leuchtmittel einschalten / ausschalten. Eine Kommunikation ist bei einer derartigen fehlerhaften Benutzung selbstverständlich nicht möglich.

Es wird eine bidirektionale Kommunikation zwischen dem Steuergerät und den Lastmodulen über eine einzige Leitung durch Modulation des auf dieser Leitung fließenden Stromes ermöglicht. Eine zusätzliche Steuerleitung ist nicht erforderlich. Dabei können die einzelnen Lastmodule unabhängig voneinander und unter Vorgabe unterschiedlicher Forderungen (z. B. hinsichtlich Helligkeit und / oder Farbe bei einer Beleuchtung) vom Steuergerät angesteuert werden. Ferner sind Rückmeldungen von den Lastmodulen an das Steuergerät möglich. Da die Modulation nur auf der Lastleitung zwischen dem Steuergerät und den Lastmodulen stattfindet, werden andere Verbraucher der Hausinstallation hiervon in keiner Weise beeinflusst.

### Kurzbeschreibung der Zeichnungen

Bevorzugte Ausführungsformen der vorliegenden Erfindung werden nachfolgend anhand der beigefügten Zeichnungen näher erläutert. Es zeigen:
- Figur 1: eine schematische Darstellung eines Kommunikationssystems, wobei die Kommunikation über eine Lastleitung stattfindet;
- Figur 2: eine detailliertere Darstellung des Steuergeräts und eines Lastmoduls des Kommunikationssystems der Figur 1;
- Figur 3: eine Darstellung des Strommodems zur Verwendung sowohl in dem Steuergerät als auch in dem Lastmodul;
- Figur 4: ein Signal-Zeit-Diagramm zur Veranschaulichung der Verläufe einer Netzspannung und eines Stroms über eine Periode der Netzspannung; und
- Figur 5: ein Flussdiagramm zur Veranschaulichung des Kommunikationsverfahrens gemäß einer beispielhaften Ausführungsform.

### Beschreibung von Ausführungsformen

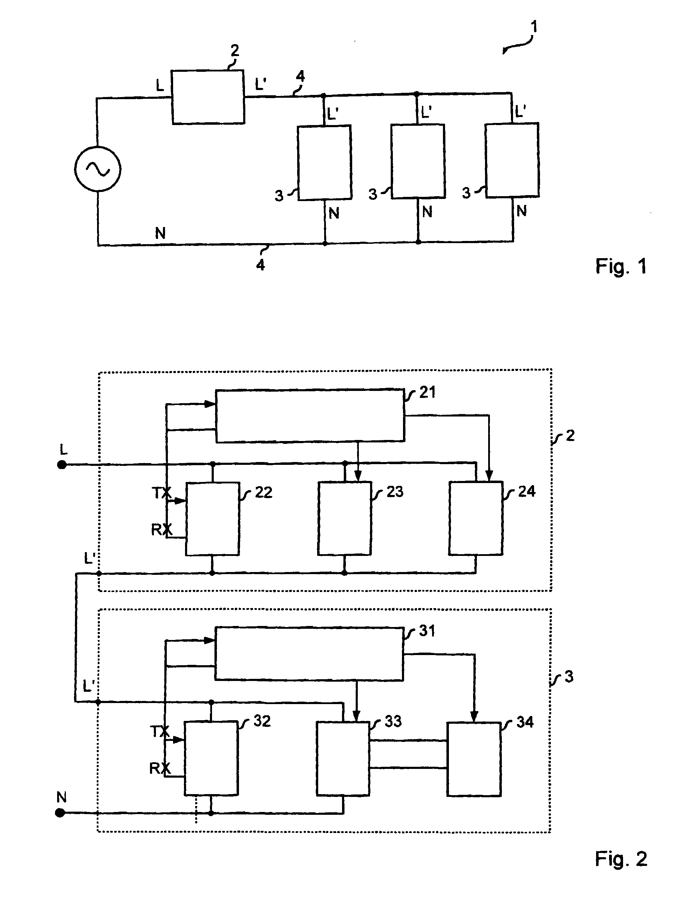

Figur 1 zeigt ein Kommunikationssystem 1 in welchem eine bidirektionale Kommunikation zwischen einem Steuergerät 2 und einem oder mehreren, im vorliegenden Beispiel drei, Lastmodulen 3 vorgesehen ist. Die Lastmodule 3 umfassen jeweils eine elektrisch betreibbare Last 34, die über die Lastleitung L' mit elektrischer Energie versorgt werden.

Bei dem Kommunikationssystem 1 sind die Lastmodule 3 parallel zueinander zwischen einer Lastleitung L' und einem Nullleiter N der Netzleitung 4 geschaltet. Das Steuergerät 2 ist dazu in Reihe zwischen Phasenleiter L und Lastleitung L' geschaltet. L' bezeichnet also den mit Lastleitung benannten geschalteten / gesteuerten Abschnitt des Phasenleiters zwischen dem Steuergerät 2 und den Lastmodulen 3.

Die Kommunikation zwischen dem Steuergerät 2 und den Lastmodulen 3 erfolgt z. B. gemäß einem Halb-Duplex-Verfahren, d. h. eine Kommunikation ist gleichzeitig nur in eine Richtung möglich und kann nur unter Beteiligung des Steuergeräts 2 durchgeführt werden. Weiterhin werden die Übertragung von elektrischer Energie an die Lastmodule 3 und die Kommunikation von Daten zwischen dem Steuergerät 2 und den Lastmodulen 3 in verschiedenen Zeitfenstern durchgeführt.

Figur 2 zeigt eine detailliertere Darstellung des Steuergeräts 2, angeordnet zwischen Phasenleiter L und Lastleitung L' und eines der zwischen der Lastleitung L' und dem Nullleiter N der Netzleitung 4 angeordneten Lastmoduls 3.

Das Steuergerät 2 umfasst einen Mikroprozessor 21, der mit einem Strommodem 22, einem Leistungsschalter 23 und einem Stromversorgungsblock 24 verbunden ist. Das Strommodem 22, der Leistungsschalter 23 und der Versorgungsblock 24 sind zueinander parallel zwischen Phasenleiter L und Lastleitung L' geschaltet.

Der Versorgungsblock 24 dient dazu, dem Phasenleiter L bei Bedarf elektrische Energie u. a. zum Betreiben des Mikroprozessors 21, des Strommodems 22 und des Leistungsschalters 23 zu entnehmen. Der Versorgungsblock 24 wird von dem Mikroprozessor 21 angesteuert, so dass dem Phasenleiter L nur dann elektrische Energie entnommen wird, wenn dies durch den Mikroprozessor 21 vorgegeben wird. Andernfalls soll der Versorgungsblock 24, zumindest während der Kommunikation zwischen Steuergerät 2 und Lastmodul 3, in einem Zustand hoher Impedanz verbleiben.

Das Strommodem 22 dient zum Überwachen des Stroms in dem Strompfad sowie dazu, eine gewünschte Impedanz einzustellen, so dass die nachfolgend beschriebene Kommunikation möglich wird. Das Strommodem 22 des Steuergeräts 2 ist in den Strompfad zwischen Phasenleiter L und Lastleitung L' geschaltet und dient zum Steuern und Überwachen des Stromniveaus in der Lastleitung L'.

Der Leistungsschalter 23 wird von dem Mikroprozessor 21 so gesteuert, dass dieser während einer über die Lastleitung L' stattfindenden Kommunikation geöffnet ist und zum Übertragen von elektrischer Energie an die Lastmodule 3 außerhalb eines Kommunikationszeitfensters während eines Energieübertragungszeitfensters geschlossen wird. Der Leistungsschalter 23 kann mit einem Halbleiterbauelement, wie z.B. einem MOSFET oder dergleichen ausgebildet sein.

Mithilfe des Mikroprozessors 21 werden zum Übermitteln einer Information Datenbits durch Anpassen der Impedanz des Strommodems 22 moduliert, wobei der Strom während einer Kommunikationsphase im Bereich zwischen einem minimalen Stromwert Iₘᵢₙ und einem maximalen Stromwert I_{maX} geändert wird. Für den Ablauf der Informationsübertragung kommt es grundsätzlich nicht auf die Art an, in der die Information bzw. die Daten moduliert werden. Es wird daher nicht näher auf die Modulationsarten des zu übertragenden Signals eingegangen. Zur Beschreibung des nachfolgenden Kommunikationsverfahrens ist es ausreichend, dass innerhalb des Kommunikationszeitfensters KF die Datenbits gemäß einem vorgegebenen Modulationsverfahren durch geeignete Wechsel eines Stromsignals zwischen dem vorgegebenen minimalen Stromwert Iₘᵢₙ und dem vorgegebenen maximalen Stromwert Iₘₐₓ repräsentiert werden. Auf die Nutzung der Funktion der Impedanzänderung wird in Verbindung mit dem Kommunikationsverfahren näher eingegangen. Weiterhin kann das Strommodem 22 durch Messen eines Stroms in einem Strompfad z.B. mithilfe des Mikroprozessors 21 Daten bzw. eine Information empfangen.

Das Lastmodul 3 ist in ähnlicher Weise aufgebaut. Das Lastmodul 3 umfasst einen Mikroprozessor 31, ein Strommodem 32, einen Leistungsblock 33 und die Last 34. Das Strommodem 32 und der Leistungsblock 33 sind zwischen der Lastleitung L' und dem Nullleiter N der Netzleitung 4 parallel geschaltet. Die Last 34 kann beispielsweise in Form einer Lampe oder eines sonstigen Verbrauchers ausgebildet sein. Der Leistungsblock 33 dient dazu, elektrische Energie aus der Lastleitung L' zu entnehmen, um einerseits den Mikroprozessor 31 und das Strommodem 32 zu versorgen und andererseits die Last 34 zu betreiben. Wie oben für den Versorgungsblock 24 beschrieben, entnimmt der Leistungsblock 33 elektrische Energie, gesteuert durch den Mikroprozessor 31. Das Abzweigen elektrischer Energie aus der Lastleitung L' zum Betreiben eines Verbrauchers ist aus dem Stand der Technik bekannt und es wird daher nicht näher darauf eingegangen.

Der Mikroprozessor 31 kann die Last 34 ansteuern, um die Leistungsaufnahme und/oder Betriebsparameter und dergleichen vorzugeben. Im Fall einer Lampe als Last können Helligkeit bei einfarbiger Lampe oder Helligkeit und Farbe bei Farblampen variiert und eine Rückmeldung über den Status der Lampe (z. B. eine Information über einen Defekt in der Lampe, deren Leistungsaufnahme und dergleichen) von der Lampe erhalten werden.

Das Kommunikationssystem 1 mit dem Steuergerät 2 und den Lastmodulen 3 in den obigen Konfigurationen kann dazu verwendet werden, eine digitale Kommunikation zwischen dem Steuergerät 2 und dem Lastmodul 3 zum Steuern der Last 34 zu realisieren.

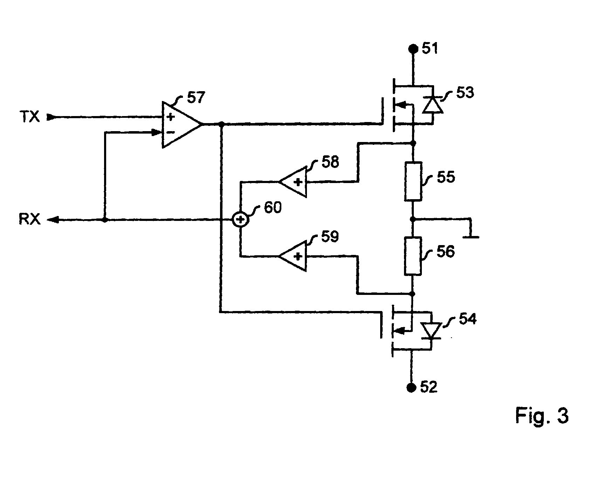

In Figur 3 ist eine detailliertere Darstellung des Strommodems 22 bzw. 32 dargestellt. Das Strommodem 22, 32 wird seriell in die entsprechende Netzleitung respektive Lastleitung geschaltet und weist einen ersten Anschluss 51 zum Verbinden mit dem Phasenleiter L respektive mit der Lastleitung L' und einen zweiten Anschluss 52 zum Verbinden mit der Lastleitung L' respektive mit dem Nulleiter N der Netzleitung 4 auf. Zwischen den Anschlüssen 51, 52 befindet sich ein Strompfad, in dem ein erster Leistungsschalter, z.B. ein erster n-Kanal-MOSFET 53 vom Anreicherungstyp, und ein zweiter Leistungsschalter, z.B. ein zweiter n-Kanal-MOSFET 54 vom Anreicherungstyp, seriell vorgesehen sind. Weiterhin sind in Reihe zu den MOSFETs 53, 54 ein erster Sensierungswiderstand 55 und ein zweiter Sensierungswiderstand 56 vorgesehen.

Im Detail ist ein erster Anschluss (Drain-Anschluss) des ersten MOSFETs 53 mit dem ersten Anschluss 51 des Strommodems 22, 32 verbunden, während ein zweiter Anschluss (Source-Anschluss) des ersten MOSFETs 53 mit einem ersten Anschluss des ersten Sensierungswiderstands 55 verbunden ist. Ein zweiter Anschluss des ersten Sensierungswiderstands 55 ist mit einem Massepotential oder einem sonstigen festgelegten Potential sowie mit dem ersten Anschluss des zweiten Sensierungswiderstands 56 verbunden. Ein zweiter Anschluss des zweiten Sensierungswiderstands 56 ist mit einem ersten Anschluss (Source-Anschluss) des zweiten MOSFETs 54 verbunden. Ein zweiter Anschluss (Drain-Anschluss) des zweiten MOSFETs 54 ist mit dem zweiten Anschluss des Strommodems 22, 32 verbunden. Die Steueranschlüsse (Gate-Anschlüsse) der MOSFETs 53, 54 sind miteinander und mit dem Ausgang eines Operationsverstärkers 57 verbunden.

Eingangsseitig ist an dem nicht invertierenden Eingang des Operationsverstärkers 57 ein TX-Signal TX und an dem invertierenden Eingang des Operationsverstärkers 57 ein RX-Signal RX angelegt. Das TX-Signal TX wird von dem Mikroprozessor 21, 31 bereitgestellt, während das RX-Signal RX einem Spannungssignal entspricht, das proportional zum absoluten Wert des Stroms zwischen dem ersten und zweiten Anschluss 51, 52 des Strommodems ist. Dies erhält man durch zwei Halbwellengleichrichterverstärker 58, 59, die ein Spannungspotential an dem ersten Anschluss des ersten Sensierungswiderstands 55 und an dem zweiten Anschluss des zweiten Sensierungswiderstands 56 abgreifen, die von dem Stromfluss durch den Strompfad des Strommodems 22, 32 abhängen. Die verstärkten Spannungspotentiale werden in einem Summierglied 60 addiert, so dass man ein Spannungssignal proportional zu dem absoluten Wert des Stroms in dem Stromkanal zwischen dem ersten und zweiten Anschluss 51, 52 des Strommodems 22, 32 erhält.

Das RX-Signal RX wird als Rückkopplungssignal in einer Regelschleife verwendet, die die Steuerspannung der MOSFETs 53, 54 steuert. Auf diese Weise kann der Strom in dem Stromkanal durch das Strommodem auf einen Wert eingestellt werden, der proportional zu dem TX-Signal TX ist.

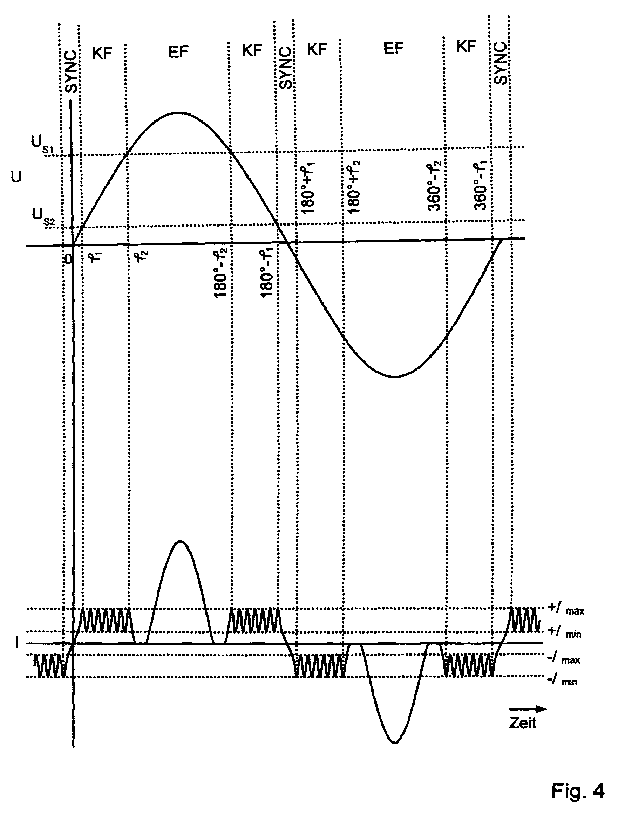

In Figur 4 ist ein Signal-Zeit-Diagramm dargestellt, das die Trennung zwischen Signal- und Energieübertragung in Energieübertragungszeitfenster EF und Kommunikationszeitfenster KF darstellt. Der obere sinusförmige Verlauf zeigt den Verlauf der Netzspannung U zwischen dem Phasenleiter L und dem Nullleiter N der Netzleitung 4 an. Der periodische Verlauf der Spannung ist in aufeinander folgende Zeitfenster aufgeteilt, nämlich in das Energieübertragungszeitfenster EF, in dem elektrische Energie übertragen wird, und in das Kommunikationszeitfenster KF, in dem eine Signalübertragung zur Kommunikation zwischen dem Steuergerät 2 und den Lastmodulen 3 stattfindet.

Das Kommunikationszeitfenster KF ist bezüglich des Spannungsverlaufs definiert und befindet sich in Bereichen, in dem der Betrag der Spannung kleiner ist als ein erster vorgegebener Schwellenwert U_{S1} und größer als ein zweiter vorgegebener Schwellenwert U_{S2}. Dadurch werden Winkelbereiche ϕ₁, ϕ₂; 180° - ϕ₂, 180° - ϕ₁; 180° + ϕ₁, 180° + ϕ₂; 360°- ϕ₂, 360°- ϕ₁ des Spannungszeigers bezüglich der Periodendauer des Spannungsverlaufs als Kommunikationszeitfenster KF definiert. Das Energieübertragungszeitfenster EF ist bezüglich des Spannungsverlaufs definiert und befindet sich in Bereichen, in dem der Betrag der Spannung größer ist als der zweite vorgegebene Schwellenwert U_{S2}. Dadurch werden Winkelbereiche ϕ₂, 180° - ϕ₂; 180° + ϕ₂, 360°- ϕ₂ definiert.

Vorzugsweise entspricht der erste Schwellenwert U_{S1} der Spannung einer Spannung zwischen 30% und 70% des Scheitelwerts der Netzspannung, bevorzugt einer Spannung zwischen 40% und 60% des Scheitelwerts, wie z.B. 50%. Der zweite Schwellenwert U_{S2} der Spannung entspricht vorzugsweise einer Spannung zwischen 5% und 25% des Scheitelwerts der Netzspannung, insbesondere zwischen 10% und 20% des Scheitelwerts der Netzspannung, z.B. 15%.

Grundsätzlich sollte vorgesehen sein, dass sich das Energieübertragungszeitfenster über den Scheitelwert des Verlaufs der Netzspannung erstreckt. Alternativ zu obiger symmetrischen Anordnung des Energieübertragungszeitfensters können auch asymmetrische Anordnungen des Energieübertragungszeitfensters bezüglich des Scheitelwerts der Netzspannung vorgesehen werden.

Im Bereich um den Nulldurchgang der Netzspannung, in dem die Spannung betragsmäßig kleiner ist als der zweite Schwellenwert U_{S2}, ist ein Synchronisationszeitfenster SYNC vorgesehen, das zwei der Kommunikationszeitfenster KF unterteilt. Das Synchronisationszeitfenster SYNC dient nicht zum Übertragen einer Information zwischen dem Steuergerät 2 und den Lastmodulen 3, da die verfügbare Spannung zum Bereitstellen des maximalen Stromwerts Iₘₐₓ auf der Lastleitung L' und zum Übertragen elektrischer Energie an die Last 34 zu gering ist. In diesem Fall befinden sich alle Strommodems 22, 32 des Steuergeräts 2 und der Lastmodule 3 in einem passiven "Listen"-Zustand.

Ferner kann der Nulldurchgang der Netzspannung in geeigneter Weise durch die Mikroprozessoren 21, 31 detektiert werden, um die internen Zeitgeber des Mikroprozessors bezüglich der Netzfrequenz des Stromnetzes zu synchronisieren. Die Detektion kann mithilfe eines geeigneten Spannungsmessers und/oder mithilfe der Sensierungswiderstände 55, 56 des Strommodems 22, 32 erfolgen. Der Versorgungsblock 24 und der Leistungsblock 33 sollten weiterhin während der Synchronisierungsphase deaktiviert sein und der Leistungsschalter 23 sollte ebenfalls geöffnet bzw. hochohmig sein, da während des Nulldurchgangs keine Energie in nennenswertem Umfang an die Last 34 übertragen werden kann.

Nach einer Zeitdauer, die dem Phasenwinkel ϕ₁ nach dem Nulldurchgang entspricht, beginnt die Kommunikation in einem weiteren Kommunikationszeitfenster erneut, wobei der Leistungsschalter 23 weiterhin geöffnet bleibt. Zu einem Umschaltzeitpunkt nach dem Nulldurchgang der Netzspannung, der dem Phasenwinkel ϕ₂ entspricht, wird die Kommunikation beendet und die Energieübertragungsphase des Energieübertragungszeitfensters beginnt. Alle Strommodems 22, 32 werden, gesteuert durch die synchronisierten Mikroprozessoren 21, 31, abgeschaltet und der Leistungsschalter 23 wird geschlossen, um während des Energieübertragungszeitfensters elektrische Energie an die Lastmodule 3 zu übertragen. Auch wird der Leistungsblock 33 durch die Mikroprozessoren 21, 31 aktiviert und beginnt damit, elektrische Energie in Form eines Versorgungsstroms für die entsprechende Last 34 abzuzweigen. Es ist zweckmäßig, zwischen dem Abschalten der Strommodems 22, 32 und dem Schließen des Leistungsschalters 23 geeignete Pufferzeitbereiche vorzusehen. In den Pufferzeitbereichen ist der Leistungsschalter 23 geschlossen und die Strommodems 22, 32 befinden sich in einem Aus-Zustand mit größtmöglicher Impedanz, um eine Überschneidung des Energieübertragungszeitfensters und des Kommunikationszeitfensters zu vermeiden, die zu einer Überlastung der Strommodems 22, 32 und zu Demodulierungsfehlern führen kann.

Anhand des ebenfalls in Fig. 4 dargestellten Stromverlaufs des Stroms auf der Lastleitung L' erkennt man die betragsmäßig hohen Stromwerte des Versorgungsstroms während des Energieübertragungszeitfensters und die Stromwerte des Kommunikationsstroms, die zum Übertragen einer digitalen Information zwischen zwei Stromwerten Iₘₐₓ, Iₘᵢₙ wechseln, deren Vorzeichen jeweils davon abhängen, ob die Netzspannung positiv oder negativ ist.

Nach einer bestimmten Zeitdauer nach dem Nulldurchgang, insbesondere nach dem Überschreiten eines Maximums bzw. Minimums der Amplitude der Netzspannung, wird der Leistungsschalter 23 wieder geöffnet und die Kommunikation wird in dem anschließenden Kommunikationszeitfenster KF aufgenommen. Somit sind während jeder Periode der Netzspannung vier Kommunikationszeitfenster, in denen eine Kommunikation stattfinden kann, verfügbar.

Im Folgenden wird das Kommunikationsverfahren ausführlicher beschrieben. Die Kommunikation basiert z. B., wie oben beschrieben, auf einer Strommodulation und ist grundsätzlich dazu in der Lage, mehrere Lastmodule 3 zu betreiben. Die erhöhten Anforderungen an das Kommunikationsverfahren bestehen darin, dass die Lastmodule 3 zueinander parallel zwischen Lastleitung L' und Nullleiter N der Netzleitung 4 geschaltet werden und in Reihe mit dem Steuergerät 2 geschaltet werden müssen. Dies ist durch die verfügbare Leitungsinfrastruktur, beispielsweise in Gebäuden, vorgegeben. In diesem Szenario kann das Steuergerät 2 als "Master" Informationen an alle Lastmodule 3 als "Slaves" kommunizieren, indem der Gesamtstrom in dem Schaltkreis zwischen einem minimalen Stromwert Iₘᵢₙ und einem maximalen Stromwert Iₘₐₓ moduliert wird. Weiterhin kann jedes Lastmodul 3 nur in einem geringen Maß zu dem Strom in dem Leitungsnetz beitragen, insbesondere bei einer größeren Anzahl von Lastmodulen 3. Aus diesem Grund sieht das Kommunikationsverfahren vor, dass nur ein Gerät 2, 3 gleichzeitig senden kann. Weiterhin sollte vorgesehen sein, dass, wenn ein Lastmodul 3 sendet, die anderen Lastmodule 3 ihre Strommodems 32 von der Lastleitung L' trennen, d. h. in den Aus-Zustand versetzen bzw. hochohmig schalten. Um einen Konflikt der Datenübertragung auf der Lastleitung L' zu vermeiden, sollte ein Lastmodul 3 nur dann senden, wenn dieses ausdrücklich durch das Steuergerät 2 dazu aufgefordert worden ist.

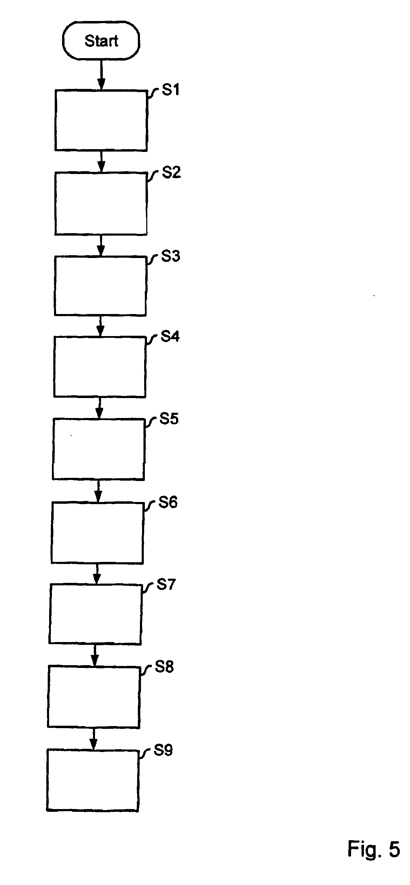

In Figur 5 ist ein Flussdiagramm zur Veranschaulichung des Kommunikationsverfahrens dargestellt. Schritt S1 betrifft eine Einschaltphase, wenn die Netzspannung eingeschaltet worden ist. In diesem Zustand werden alle Strommodems 22, 32 in einen Aus-Zustand versetzt, bei dem der Strompfad durch das Strommodem 22, 32 eine hohe Impedanz aufweist. Dazu wird das TX-Signal TX durch den entsprechenden Mikroprozessor 21, 31 auf Null gesetzt, um durch das resultierende Steuersignal die MOSFETs 53, 54 zu öffnen und das betreffende Strommodem 22, 32 von dem Stromkreis zu trennen. Der Leistungsschalter 23 ist während der Einschaltphase ebenfalls geöffnet. Der Versorgungsblock 24 sowie der Leistungsblock 33 entnehmen der Lastleitung L' lediglich einen Versorgungsstrom, so dass eine ausreichende Gleichspannungsversorgung in jedem der Steuergeräte 2 und der Lastmodule 3 aufgebaut werden kann. Sobald dieser Zustand erreicht ist, booten die Mikroprozessoren 21, 31 des Steuergeräts 2 und der Lastmodule 3 und der Versorgungsblock 24 bzw. der Leistungsblock 33 des Steuergeräts können in einen Zustand hoher Impedanz versetzt werden.

Sobald in Schritt S2 der entsprechende Mikroprozessor 21, 31 die Steuerung des Steuergeräts 2 bzw. des betreffenden Lastmoduls 3 übernommen hat, versetzt der Mikroprozessor 21, 31 das jeweilige Strommodem 21, 31 in einen "Listen"-Zustand. Im "Listen"-Zustand wird das TX-Signal TX verwendet, um den Strom in dem Strompfad des Strommodems auf den vorgegebenen maximalen Stromwert Iₘₐₓ zu begrenzen. Dazu wird das TX-Signal TX als Spannungssignal von dem Mikroprozessor 31 vorgegeben und durch die Differenzbildung mit dem RX-Signal RX eine Regelung gebildet. Das TX-Signal TX entspricht einer Spannung, deren Spannungswert dem Spannungsabfall über den Sensierungswiderständen 55, 56 entspricht, wenn durch sie ein Strom mit dem maximalen Stromwert Iₘₐₓ fließt. Das RX-Signal RX entspricht dem tatsächlichen Spannungsabfall über den Sensierungswiderständen 55, 56. Die Steuerspannung am Ausgang des Operationsverstärkers 57 stellt sich so ein, dass ein zu der Spannung des TX-Signals TX proportionaler Strom, nämlich Iₘₐₓ, durch den Strompfad fließt.

Somit steuern die Mikroprozessoren 31 der Lastmodule 3 ihre Strommodems 32 an, um den Stromfluss durch jedes der Strommodems 32 auf den maximalen Stromwert Iₘₐₓ zu begrenzen.

Das Steuergerät 2 stellt sein Strommodem 21 ein, um den Strom in der Lastleitung L' auf das nominelle Maximum zu beschränken. Wenn beispielsweise das Steuergerät 2 mit einer maximalen Anzahl von Lastmodulen nₘₐₓ arbeiten soll, so soll das Strommodem auf einen Strom von nₘₐₓ x Iₘₐₓ begrenzt werden. Dies erfolgt während mindestens einer vollständigen Periode der Wechselspannung. Der Nulldurchgang kann durch die Mikroprozessoren 21, 31 erkannt werden, um eine zeitliche Referenz aufzubauen, die gemeinsam für das Steuergerät 2 sowie alle Lastmodule 3 gilt. Ein mithilfe des RX-Signals RX im Mikroprozessor 21 des Steuergeräts 2 ermittelter Leitungsstrom Iₘₑₛₛ kann von dem Steuergerät 2 verwendet werden, um die Anzahl n von angeschlossenen Lastmodulen 3 zu schätzen, indem der gemessene Wert des Leitungsstroms Iₘₑₛₛ durch den nominellen Wert des maximalen Stroms Iₘₐₓ, der vorzugsweise für jedes der Lastmodule 3 gleich voreingestellt ist, dividiert wird. Dazu sollte möglichst der vorgegebene maximale Leitungsstrom für alle Lastmodule 3 identisch gewählt werden. Die Anzahl von Perioden der Netzspannung, die für den Schritt S2 verwendet wird, kann vorgegeben sein.

In einem Schritt S3 steht eine Synchronisation der Mikroprozessoren 21, 31 fest und die Anzahl n der angeschlossenen Lastmodule wurde geschätzt. Die Kommunikation wird nun entsprechend obiger Vorgehensweise nur innerhalb der Kommunikationszeitfenster KF durchgeführt. Dann verbleiben alle Lastmodule 3 in dem "Listen"-Zustand und das Steuergerät 3 kann mit einer Übertragung von Daten gemäß einem "Talk"-Zustand beginnen. Der "Talk"-Zustand sieht vor, dass das TX-Signal TX verwendet wird, um den Strom der Phase im gesamten Bereich zwischen dem minimalen Stromwert Iₘᵢₙ und dem maximalen Stromwert Iₘₐₓ zur Datenübertragung zu nutzen. Durch Messen der abfallenden Spannung an den Sensierungswiderständen 55, 56 kann der Strom überwacht werden, um eine Kollision zu erkennen. Eine Kollision wird erkannt, wenn der Stromwert entsprechend dem RX-Signal RX den maximalen Stromwert Iₘₐₓ überschreitet.

Die übertragenen Daten können dazu verwendet werden, Befehle zu übertragen, wie beispielsweise das Einschalten einer Last, oder die Signalübertragung kann Teil eines komplexeren Handshake-Verfahrens, beispielsweise zum Erkennen jedes einzelnen Lastmoduls 3 und zum Zuordnen einer Adresse, sein.

Nachfolgend wird ein Verfahren zum Erkennen der angeschlossenen Lastmodule 3 und zum Zuordnen von Adressen, um jedes der Lastmodule 3 gezielt durch das Steuergerät 2 ansprechen zu können, beschrieben. Nach dem Beenden der zuvor beschriebenen Startsequenz kann das Steuergerät 2 in Schritt S4 einen Befehl ID_request senden, um die Lastmodule 3 aufzufordern, sich selbst zu erkennen zu geben. Das Steuergerät 2 versetzt sich nach dem Senden des ID_request-Befehls in den "Listen"-Zustand (Schritt S5).

Sobald die angeschlossenen Lastmodule 3 einen ID_request-Befehl von dem Steuergerät 2 empfangen, generiert dieses in Schritt S6 einen temporären Identifizierer, beispielsweise zufällig oder abhängig von der Seriennummer des jeweiligen Lastmoduls 3. Dieser temporäre Identifizierer wird in Schritt S6 von jedem der Lastmodule 3 nach einer zufälligen Anzahl von Kommunikationszeitfenstern KF an das Steuergerät 2 übertragen.

Nachdem das Steuergerät 2 in Schritt S7 die Antwort von einem der Lastmodule 3 empfangen hat, überträgt es den gleichen temporären Identifizierer erneut und fügt eine zugeordnete logische Adresse hinzu. Die logische Adresse wird in dem Steuergerät 2 gemäß einem vorgegebenen Schema bzw. zufällig ausgewählt. Die logische Adresse ist eindeutig und jedes der Lastmodule 3 erhält eine einzigartige logische Adresse.

Nachdem das Lastmodul 3 die Antwort von dem Steuergerät 2 empfangen hat, überprüft es den temporären Identifizierer. Wenn dieser mit dem zuvor übertragenen übereinstimmt, so speichert es die angehängte logische Adresse in seinem Speicher (Schritt S8). Ab dann kann das betreffende Lastmodul 3 direkt über die logische Adresse angesprochen werden.

Sobald allen Lastmodulen 3 auf die oben beschriebene Weise eine logische Adresse zugeordnet worden ist, kann in Schritt S9 ein Zustand eingenommen werden, in dem gemäß einem vorgegebenen Protokoll eine Kommunikation zwischen dem Steuergerät 2 und den einzelnen Lastmodulen 3 während des Kommunikationszeitfensters KF ausgeführt werden kann. Vorzugsweise findet während eines Kommunikationszeitfensters KF immer nur eine unidirektionale Kommunikation zwischen zwei Geräten 2, 3 statt.

Wenn zwei Lastmodule 3 zur gleichen Zeit den temporären Identifizierer als Antwort auf den ID_request-Befehl übertragen, dekodiert das Steuergerät 2 eine fehlerhafte Information. In diesem Fall werden Fehlerdetektionsverfahren angewendet. Beispielsweise kann das Steuergerät 2 ausgebildet sein, um zu erkennen, dass die Prüfsumme falsch ist, woraufhin das Steuergerät 2 die empfangene Nachricht verwirft. Solange die Lastmodule 3 nicht innerhalb einer vorbestimmten Zeit Antworten erhalten, wiederholen sie die Übertragung des temporären Identifizierers jeweils nach einer zufälligen Anzahl von Kommunikationszeitfenstern KF.

Auf gleiche Weise detektiert das Lastmodul 3, wenn eine Kollision auftritt und keine Adresse zugewiesen wird. Dann wiederholt das Lastmodul 3 die Übertragung seines temporären Identifizierers nach einer zufälligen Anzahl von Kommunikationszeitfenstern KF.

Eine Kollision kann beispielsweise bei einer ASK-Modulation (Amplitude-Shift-Keying) erkannt werden. Bei der ASK-Modulation ist der betragsmäßig niedrige Stromwert (minimaler Stromwert Iₘᵢₙ) dominant. Die Kollisionsdetektion kann implementiert werden, indem der Stromwert in dem Stromkreis während des Sendens durch eines der Strommodems 22, 32 überwacht wird. Wenn beispielsweise ein niedriger Stromwert gemessen wird, obwohl das Steuergerät 2 oder eines der Lastmodule 3 zum Senden einer Information versucht, den maximalen Stromwert Iₘₐₓ auf die Lastleitung L' einzuprägen, so wird eine Kollision detektiert und das Steuergerät 2 bzw. das betreffende Lastmodul 3 unterbricht die Übertragung. Das Auftreten einer Kollision kann entsprechend in dem Steuergerät 2 bzw. Lastmodul 3 dazu führen, dass eine erneute Übertragung in einem der darauf folgenden Kommunikationszeitfenster KF initiiert wird. Im Falle einer FSK-Modulation (Frequency-Shift-Keying) wird der Signalverlauf im Allgemeinen verzerrt, so dass die Kollision durch die Verzerrung des Signals erkannt werden kann.

Um die Wahrscheinlichkeit zu reduzieren, dass zwei Lastmodule 3 den gleichen temporären Identifizierer auswählen, kann dieser in Form einer Bit-Abfolge ausreichender Länge vorliegen, z.B. 16 Bit, 24 Bit oder 32 Bit.

Gemäß weiteren Ausführungsformen können Gruppenadressen vorgesehen sein, um eine Gruppe oder Untermenge von Lastmodulen 3 gleichzeitig zu adressieren. Das Protokoll kann daher Gruppenidentifizierer vorsehen, die es zusätzlich zur einfachen Adresse der Lastmodule 3 ermöglichen, die Lastmodule 3 durch eine Gruppenadresse anzusprechen. Die Zuordnung der Gruppenadresse zu den Lastmodulen 3 kann im Wesentlichen auf die gleiche Weise durchgeführt werden, wie die Zuordnung der logischen Adresse.

Das Steuergerät 2 kann weiterhin ausgebildet sein, um zu erkennen, wenn eine herkömmliche Last ohne Strommodulationsfähigkeiten angeschlossen ist, wodurch die digitale Kommunikation gemäß dem obigen Kommunikationsverfahren verhindert wird. Dies kann bereits während der Einschaltphase in Schritt S1 festgestellt werden, indem der Leitungsstrom überwacht wird. Eine Last, die nicht gemäß dem obigen Verfahren betrieben wird, führt zu anomalen Variationen des Stroms.

Nachzutragen ist noch, dass sowohl das Steuergerät als auch die Lastmodule mit Speichermitteln ausgerüstet sind, welche die einmal festgelegten Zuordnungen zwischen dem Steuergerät und den Lastmodulen auch bei Netzausfall dauerhaft abspeichern.

Auch wenn vorstehend beispielhaft und ausführlich die Amplitudenmodulation beschrieben wird, kann selbstverständlich auch die Frequenzmodulation verwendet werden. Vorteilhaft können beliebige, allgemein bekannte Modulationsarten verwendet werden.

### Bezugszeichenliste

- 1: Kommunikationssystem
- 2: Steuergerät
- 3: Lastmodul
- 4: Netzleitung
- 21: Mikroprozessor
- 22: Strommodem
- 23: Leistungsschalter
- 24: Versorgungsblock
- 31: Mikroprozessor
- 32: Strommodem
- 33: Leistungsblock
- 34: Last
- 51: erster Anschluss
- 52: zweiter Anschluss
- 53: erster MOSFET
- 54: zweiter MOSFET
- 55: erster Sensierungswiderstand
- 56: zweiter Sensierungswiderstand
- 57: Operationsverstärker
- 58, 59: Halbwellengleichrichterverstärker
- 60: Summierglied
- L: Phasenleiter der Netzleitung
- L': Lastleitung
- N: Nullleiter der Netzleitung

## Patentansprüche

1. Kommunikationssystem (1) umfassend:
- ein Steuergerät (2), das seriell zwischen Phasenleiter (L) und Lastleitung (L') in eine Netzleitung (4) geschaltet ist, um nur während eines Energieübertragungszeitfensters (EF) einen Versorgungsstrom an mindestens einer Last (34) zuzulassen und nur während eines nicht mit dem Energieübertragungszeitfenster (EF) überlappenden Kommunikationszeitfensters (KF) eine bidirektionale Kommunikation durch Erfassen und/oder Modulieren eines Kommunikationsstroms über die Lastleitung (L') durchzuführen; und
- eines oder mehrere mit der Last (34) versehene Lastmodule (3), die zueinander parallel und seriell mit dem Steuergerät (2) zwischen der Lastleitung (L') und dem Nulleiter (N) der Netzleitung (4) verschaltet sind, um nur während des Energieübertragungszeitfensters (EF) elektrische Energie aus der Lastleitung (L') zu entnehmen und der entsprechenden Last (34) bereitzustellen
und um nur während des Kommunikationszeitfensters (KF) die bidirektionale Kommunikation durch Erfassen und/oder Modulieren des Kommunikationsstroms über die Lastleitung (L') durchzuführen.

2. Kommunikationssystem (1) nach Anspruch 1, wobei das Steuergerät (2) einen Leistungsschalter (23) aufweist, um diesen während des Energieübertragungszeitfensters (EF) zu schließen und außerhalb des Energieübertragungszeitfensters (EF) zu öffnen, und wobei das mindestens eine Lastmodul (3) einen Leistungsblock (33) aufweist, um während des Energieübertragungszeitfensters (EF) die elektrische Energie von der Lastleitung (L') zu entnehmen.

3. Kommunikationssystem (1) nach Anspruch 1 oder 2, wobei das Steuergerät (2) und das eine oder die mehreren Lastmodule (3) jeweils ein Strommodem (22, 32) aufweisen, wobei jedes Strommodem (22, 32) während des Energieübertragungszeitfensters (EF) deaktiviert ist, so dass dieses im Wesentlichen keine Leitfähigkeit aufweist, und während des Kommunikationszeitfensters (KF) entweder zum Empfangen in einen "Listen"-Zustand versetzt wird, in dem die Impedanz des Strommodems (22, 32) so eingestellt wird, dass der Kommunikationsstrom auf einen vorgegebenen maximalen Stromwert (Iₘₐₓ) beschränkt wird, oder in einen "Talk"-Zustand versetzt wird, in dem die Impedanz des Strommodems (22, 32) so variierbar ist, dass zum Senden einer zu übertragenden Information auf der Lastleitung (L') der Kommunikationsstrom zwischen einem vorgegebenen ersten Stromwert und einem vorgegebenen zweiten Stromwert variiert.

4. Kommunikationssystem (1) nach Anspruch 3, wobei mehrere Lastmodule (3) vorgesehen sind, deren Strommodems (32) den Stromfluss im "Listen"-Zustand auf jeweils den gleichen vorgegebenen maximalen Stromwert beschränken, wobei das Steuergerät (2) ausgebildet ist, um eine Schätzung der Anzahl der angeschlossenen Lastmodule (3) durchzuführen, indem in einer Einschaltphase die Strommodems (32) aller Lastmodule (3) in den "Listen"-Zustand versetzt werden, der sich in der Lastleitung (L') einstellende Strom durch das Strommodem (22) des Steuermoduls (2) gemessen wird und die Anzahl der Lastmodule (3) als ein Verhältnis des gemessenen Stroms zu dem für diesen Zustand im Steuermodul vorgegebenen maximalen Stromwert ermittelt wird.

5. Kommunikationssystem (1) nach einem der Ansprüche 1 bis 4, wobei das Kommunikationssystem (1) ausgebildet ist, um die bidirektionale Kommunikation nur zwischen dem Steuergerät (2) und einem des einen oder der mehreren Lastmodule (3) durchzuführen.

6. Kommunikationssystem (1) nach einem der Ansprüche 1 bis 5, wobei das Steuergerät (2) und das eine oder die mehreren Lastmodule (3) ausgebildet sind, eine Kollision aufgrund eines gleichzeitigen Sendens einer zu übertragenden Information auf der Protokoll-Ebene während der Adresszuordnung zu erkennen, sobald eine Prüfsumme falsch ist oder eine Adresse nicht zugewiesen wird.

7. Kommunikationssystem (1) nach einem der Ansprüche 1 bis 6, wobei das Steuergerät (2) und das eine oder die mehreren Lastmodule (3) ausgebildet sind, eine Kollision aufgrund eines gleichzeitigen Sendens einer zu übertragenden Information bei Anwendung von Frequenzmodulation anhand der Verzerrung des Signalverlaufs zu erkennen.

8. Kommunikationssystem (1) nach einem der Ansprüche 1 bis 6, wobei das Steuergerät (2) und das eine oder die mehreren Lastmodule (3) ausgebildet sind, eine Kollision aufgrund eines gleichzeitigen Sendens einer zu übertragenden Information anhand eines Überschreitens des maximalen Stromwerts (Iₘₐₓ) durch den Strom auf der Lastleitung (L') zu erkennen.

9. Kommunikationssystem (1) nach einem der vorstehenden Ansprüche, wobei das Kommunikationszeitfenster (KF) einem Zeitfenster entspricht, in dem die Netzspannung betragsmäßig größer ist als ein erster Schwellenwert und betragsmäßig kleiner ist als ein zweiter Schwellenwert (U_{S1}), und wobei das Energieübertragungszeitfenster (EF) einem Zeitfenster entspricht, bei dem die Netzspannung betragsmäßig größer ist als der zweite Schwellenwert (U_{S1}).

10. Kommunikationssystem (1) nach einem der vorstehenden Ansprüche, wobei das Steuergerät (2) und das eine oder die mehreren Lastmodule (3) jeweils ausgebildet sind, um einen Nulldurchgang der Netzspannung zu erkennen und um sich abhängig von einem Zeitpunkt des Nulldurchgangs zu synchronisieren.

11. Steuergerät (2) für ein Kommunikationssystem (1) zum seriellen Anschließen zwischen einem Phasenleiter (L) und einer Lastleitung (L'), umfassend:
- einen Leistungsschalter (23) zum Schalten eines Versorgungsstroms in der Lastleitung (L'),
- ein Strommodem (22) zum Durchführen einer bidirektionalen Kommunikation durch Erfassen und/oder Modulieren eines Kommunikationsstroms über die Lastleitung (L');
- einen Mikroprozessor respektive eine Datenverarbeitungseinheit (21), die ausgebildet ist, um nur während eines Energieübertragungszeitfensters den Leistungsschalter (23) zu schließen, um den Versorgungsstrom für mindestens eine Last (34) zuzulassen, und
um nur während eines nicht mit dem Energieübertragungszeitfenster überlappenden Kommunikationszeitfensters die bidirektionale Kommunikation durch Erfassen und/oder Modulieren des Kommunikationsstroms durchzuführen.

12. Lastmodul (3) für ein Kommunikationssystem (1) zum seriellen Anschließen zwischen einer Lastleitung (L') und dem Nulleiter (N) einer Netzleitung (4) zum Übertragen von elektrischer Energie, umfassend:
- eine Last (34), insbesondere einen elektrischen Verbraucher;
- einen Leistungsblock (33), um elektrische Energie aus der Lastleitung (L') zu entnehmen und der Last (34) bereitzustellen;
- ein Strommodem (32) zum Durchführen einer bidirektionalen Kommunikation durch Erfassen und/oder Modulieren eines Kommunikationsstroms über die Lastleitung (L');
- einen Mikroprozessor respektive eine Datenverarbeitungseinheit (31), die ausgebildet ist,
um nur während eines Energieübertragungszeitfensters elektrische Energie aus der Lastleitung (L') zu entnehmen und der Last (34) bereitzustellen und
um nur während eines nicht mit dem Energieübertragungszeitfenster überlappenden Kommunikationszeitfensters die bidirektionale Kommunikation durch Erfassen und/oder Modulieren des Kommunikationsstroms durchzuführen.

13. Verfahren zur Kommunikation zwischen einem Steuergerät (2) und einem oder mehreren Lastmodulen (3) in einem Kommunikationssystem (1), wobei das Kommunikationssystem (1) ein Steuergerät (2), das seriell in eine Netzleitung (4) geschaltet ist, und ein oder mehrere mit der Last (34) versehene Lastmodule (3) aufweist, die zueinander parallel und seriell mit dem Steuergerät (2) in der Lastleitung (L') verschaltet sind, mit folgenden Schritten:
- Betreiben des Steuergeräts (2), um zeitlich aufeinander folgend nur während eines Energieübertragungszeitfensters einen Versorgungsstrom zum Betreiben einer Last (34) zuzulassen und
um nur während eines nicht mit dem Energieübertragungszeitfenster überlappenden Kommunikationszeitfensters (KF) eine bidirektionale Kommunikation durch Erfassen und/oder Modulieren eines Kommunikationsstroms über die Lastleitung (L') durchzuführen; und
- Betreiben des einen oder der mehreren Lastmodule (3), um nur während des Energieübertragungszeitfensters (EF) elektrische Energie aus der Lastleitung (L') zu entnehmen und der entsprechenden Last (34) bereitzustellen, und
um nur während des Kommunikationszeitfensters (KF) die bidirektionale Kommunikation durch Erfassen und/oder Modulieren des Kommunikationsstroms über die Lastleitung (L') durchzuführen.

14. Verfahren nach Anspruch 13, wobei das Steuergerät (2) und das eine oder die mehreren Lastmodule (3) während des Kommunikationszeitfensters (KF) entweder zum Empfangen von Daten in einen "Listen"-Zustand versetzt werden, in dem die Impedanz des Strommodems so eingestellt wird, dass der Kommunikationsstrom auf einen vorgegebenen maximalen Stromwert beschränkt wird, oder in einen "Talk"-Zustand versetzt werden, in dem die Impedanz des Strommodems so variierbar ist, dass zum Senden einer zu übertragenden Information auf der Lastleitung (L') der Kommunikationsstrom zwischen einem vorgegebenen ersten Stromwert und einem vorgegebenen zweiten Stromwert variiert.

15. Verfahren nach Anspruch 14, wobei während einer Einschaltphase das eine oder die mehreren Lastmodule (3) den Kommunikationsstrom in dem "Listen"-Zustand auf jeweils den gleichen vorgegebenen maximalen Stromwert (Iₘₐₓ) beschränken, wobei das Steuergerät (2) eine Schätzung der Anzahl der angeschlossenen Lastmodule (3) durchführt, indem in einer Einschaltphase die Strommodems (32) aller Lastmodule (3) in den "Listen"-Zustand versetzt werden, der sich in der Lastleitung (L') einstellende Strom durch das Strommodem (22) des Steuermoduls (2) gemessen wird und die Anzahl der Lastmodule (3) als ein Verhältnis des gemessenen Stroms zu dem für diesen Zustand im Steuermodul vorgegebenen maximalen Stromwert (Iₘₐₓ) ermittelt wird.

16. Verfahren nach einem der Ansprüche 13 bis 15, wobei eine Adresszuordnung durchgeführt wird, indem das Steuergerät (2) eine Aufforderung zum Anfordern einer Adresse durch das eine oder die mehreren Lastmodule (3) sendet, die Lastmodule (3) als Antwort nach einer zufälligen Anzahl von Kommunikationszeitfenstern (KF) einen zufälligen Identifikationscode an das Steuergerät (2) senden und das Steuergerät (2) eine mit einer logischen Adresse und dem zufälligen Identifikationscode versehene Information sendet, so dass dem betreffenden Lastmodul (3) anhand des gesendeten zufälligen Identifikationscodes seine logische Adresse zugewiesen wird.

17. Verfahren zur Durchführung in einem Steuergerät (2) für ein Kommunikationssystem (1), zum seriellen Anschließen in einer Netzleitung (4), wobei das Steuergerät (2) umfasst:
- einen Leistungsschalter (23) zum Schalten eines Versorgungsstroms in der Lastleitung (L'); und
- ein Strommodem (22) zum Durchführen einer bidirektionalen Kommunikation durch Erfassen und/oder Modulieren eines Kommunikationsstroms über die Lastleitung (L');
wobei das Verfahren vorsieht, den Leistungsschalter (23) nur während eines Energieübertragungszeitfensters (EF) zu schließen, um den Versorgungsstrom für mindestens eine Last zuzulassen, und nur während eines nicht mit dem Energieübertragungszeitfenster (EF) überlappenden Kommunikationszeitfensters (KF) die bidirektionale Kommunikation durch Erfassen und/oder Modulieren des Kommunikationsstromes durchzuführen.

18. Verfahren zur Durchführung in einem Lastmodul (3) für ein Kommunikationssystem (1) zum seriellen Verschalten mit einer Lastleitung (L') zum Übertragen von elektrischer Energie, wobei das Lastmodul (3) umfasst:
- eine Last (34), insbesondere einen elektrischen Verbraucher;
- einen Versorgungsblock (33), um elektrische Energie aus der Lastleitung (L') zu entnehmen und der Last (34) bereitzustellen; und
- ein Strommoden (32) zum Durchführen einer bidirektionalen Kommunikation durch Erfassen und/oder Modulieren eines Kommunikationsstroms über die Lastleitung (L');
wobei das Verfahren vorsieht, nur während eines Energieübertragungszeitfensters (EF) elektrische Energie aus der Lastleitung (L') zu entnehmen und der Last bereitzustellen und nur während eines nicht mit dem Energieübertragungszeitfenster (EF) überlappenden Kommunikationszeitfensters (KF) die bidirektionale Kommunikation durch Erfassen und/oder Modulieren des Kommunikationsstroms durchzuführen.
